# EUROPEAN PATENT APPLICATION

(11) **EP 1 857 179 A1**
(43) Date of publication of application: **21.11.2007**
(21) Application number: 06711839.8
(22) Date of filing: 17.01.2006
(51) Int. Cl.: B01J 29/48, B01J 23/30, B01J 23/84, B01J 35/02, B01J 37/08

(54) **VISIBLE LIGHT-RESPONSIVE PHOTOCATALYST COMPOSITION AND PROCESS FOR PRODUCING THE SAME**

(30) Priority: 18.01.2005 JP 2005010190; 18.01.2005 JP 2005010192; 05.10.2005 JP 2005291994; 05.10.2005 JP 2005291995
(71) Applicant: NIPPON SHOKUBAI KAGAKU KOGYO CO. LTD., Osaka-shi, Osaka 541-0043 (JP)
(72) Inventor: KITAGUCHI, Shinya, ogo, 6728044 (JP)
(74) Representative: Müller-Boré & Partner Patentanwälte
(86) International application number: PCT/JP2006/300559
(87) International publication number: WO 2006/077839

(57) **Abstract**

The photocatalyst composition is a visible light-responsive photocatalyst being applicable to various applications, and exerts effect for the purification of harmful materials in the air, the decomposition and removal of dirt, anti-bacterium, and mildew resistance even under the irradiation of light mainly composed of visible light like a fluorescent lamp, and the composition is **characterized in that** the composition comprises the tungsten oxide that the primary particle diameter of the crystal is 10 to 100 nm and the crystal structure measured by X-ray diffraction is WOₓ (2.5≦X≦ 3.0).

## Description

### TECHNICAL FIELD

The present invention relates to a visible light-responsive photocatalyst and a visible light-responsive photocatalyst composition, and to the process for producing the same.

### BACKGROUND ART

When light that has energy more than the band gap is irradiated to a material having light semiconductivity such as a titanium oxide, electrons and holes are generated. As a result, the oxygen species having strong oxidizing power such as superoxides and OH radicals are generated in the surface of a photocatalyst, and hazardous components and the like that come in contact with can be oxidized and decomposed. The development of such technology has been advanced that such a photocatalyst is applied to the cleanup, deodorization, fouling prevention, sterilization, and the like in the atmospheric and indoor environment by coating the photocatalyst with inside and outside of building and using the sunlight and the light of a fluorescent lamp.

As a substance having such light semiconductivity, a titanium oxide, which has high photocatalytic activity and is chemically stable, is generally used. However, it was necessary to irradiate ultraviolet rays of 380 nm or less to excite the anatase-type titanium oxide, and the sufficient effect of the photocatalyst was not able to be expected indoors.

Then, to improve the performance of the titanium oxide photocatalyst, it has been examined to add platinum group metals such as Pt, Pd, Rh, Ru, and Ir, and various transition metals such as Fe, Co, Ni, Cu, Zn, Ag, Cr, V, and W to the titanium oxide. Especially, the effect of improving the photocatalytic activity by the addition of a platinum group metal has been well known. For example, in Japanese Patent Application Laid-Open (JP-A) No.2004-73910, a visible light-responsive photocatalyst where a halogenated platinum compound has been supported on the surface of a photocatalyst particle having an anisotropic shape such as titanium oxide is described. However, the platinum group metal is expensive, so it is not preferable because the producing cost of the photocatalyst is increased even if the amount supported is a very small amount.

Moreover, a visible light-responsive photocatalyst provided with the response to visible light by doping nitrogen, carbon, sulfur, and the like to the titanium oxide has been proposed, and having gotten a lot of attention. For example, in International Publication No.01/10552 pamphlet and Japanese Patent Publication (JP-B) No.3498739, such photocatalyst substances are described that have the Ti-O-N structure in which nitrogen is contained in the titanium oxide crystal by replacing part of oxygen sites in the titanium oxide with the nitrogen atom, doping the nitrogen atom between lattices in the titanium oxide crystal, doping the nitrogen atom to the grain boundary of the titanium oxide, and the like and the photocatalytic action is exerted in the region of visible light.

However, in order to produce such a photocatalyst substance as mentioned above, there is no other choice but adopting the methods including (1) the method in which the titanium oxide is made to be a target material and is subjected to vapor deposition or ion plating in the atmosphere containing the nitrogen gas and then heat-treated at temperatures of 400°C or more and 700°C or less in the atmosphere containing the ammonium gas, and (2) the method in which the titanium oxide is heat-treated in the atmosphere containing the ammonium gas or the nitrogen gas, or in the mixed gas atmosphere of the nitrogen gas and the hydrogen gas, and consequently a special producing device and producing method are needed and there was problems in the applicability. Moreover, the effect of the performance improvement was also not sufficient, and a part of the ultraviolet light-responsive performance that the titanium oxide originally possessed was occasionally ruined by improving the visible light-responsive performance.

Though only ultraviolet rays can be used for the excitation (revealing the effect of the photocatalyst) of the titanium oxide as mentioned above, the cadmium sulfide and the tungsten oxide are known as a light semiconductive substance that can use visible light. However, regarding these light semiconductive substances, it is also known that there are some troubles such as low quantum efficiency because of small band gaps, and the instability caused by photodissolution.

For example, the tungsten oxide that is known to have optical activity with visible light has the band gap of 2.5 eV and can use visible light up to 480 nm. However, when the tungsten oxide is employed for the photocatalyst decomposition reaction of acetaldehyde that is a typical odor material, the tungsten oxide tends to generate the acetic acid easily as a by-product compared with the titanium oxide, and because the decomposition speed of acetic acid is slower than that of acetaldehyde, the acetic acid had the problem of adhering to the surface of the photocatalyst particles to cause the decrease in the reaction rate.

Consequently, the photocatalyst film composition containing the binder in which metallic fine particles such as platinum, ruthenium, and palladium are supported on tungsten oxide particles, and further those using an absorbent material and a titanium oxide together have been proposed as a preventive measure for the decrease in activity (JP-A No.2001-70800). However, supporting metallic particles such as platinum increases the cost.

Moreover, it has been also proposed to use a titanium oxide to be excited with ultraviolet rays together with a tungsten oxide to be excited with visible light.

For example, in JP-A No.10-95635, such a method has been proposed as the method of forming a photocatalytic hydrophilic member that an organic titanate is applied on the surface of the base material and residual organic groups are removed by the hydrolysis and the dehydration polycondensation, and then an aqueous tungstic acid solution is applied and fired at 400°C or more to form a crystalline titanium oxide and a TiO₂/WO₃ compound oxide. It has been described that the TiO₂/WO₃ compound oxide acts as an oxide super strong acid and the hydrophilicity of the surface is maintained for a long time.

However, even if a titanium oxide and a tungsten oxide are only combined and used, the ultraviolet rays of 380 nm or less is necessary to reveal the photocatalytic action of the titanium oxide, so an enough effect of the photocatalyst was not obtained easily with feeble light in the room. That is, though the visible light-responsive performance derived from the tungsten oxide was obtained by using the tungsten oxide together, the problems such as decreasing in the photocatalyst performance with time had not been solved yet. In addition, because there is optical dissolubility (self-dissolubility) in the tungsten oxide, too, and the photocatalytic effect is not maintained easily for a long term, the tungsten oxide has not arrived so that it is used at a practical level.

### DISCLOSURE OF THE INVENTION

In view of the above-mentioned present situation, the problem to be solved by the present invention is to provide the visible light-responsive photocatalyst composition that exerts the photocatalytic effect by the visible light irradiation included in the light of a fluorescent lamp and the sunlight and the production process.

To solve the above-mentioned problem, the present inventors zealously advanced the research on the photocatalyst that exerting the excellent performance under a visible light irradiation. Consequently, it was found that the photocatalyst composition including the tungsten oxide that had a specific primary particle diameter and a specific crystal structure was excellent in photocatalytic effect such as the excellent gas cleanup and anti-bacterium and further in the durability in the effect even under the irradiation of light mainly composed of not only the sunlight but also feeble visible light like a fluorescent lamp in the room, resulting in the completion of the present invention.

That is, the photocatalyst composition of the present invention is characterized by a crystal having the primary particle diameter of 10 to 100 nm, and by containing the tungsten oxide whose crystal structure measured by X-ray diffraction is WOₓ (2.5≦X≦3.0). Moreover, the process of producing the photocatalyst composition of the present invention is characterized in that the aqueous ammonium tungstate solution is impregnated in porous inorganic oxide and then heat-treated under the reducing atmosphere.

### BRIEF DESCRIPTION OF THE DRAWINGS

Fig. 1 is the X-ray diffraction diagram of the photocatalyst composition obtained by Example 1-1.
Fig. 2 is the X-ray diffraction diagram of the photocatalyst composition obtained by Example 1-2.
Fig. 3 is the graph indicating the results of the performance tests with visible light of Example 1-1, Reference example 1-1, and Comparative example 1-3.
Fig. 4 is the graph indicating the results of the performance tests with visible light of Example 2-3, Comparative example 2-1, and Comparative example 2-2.
Fig. 5 is the graph indicating the results of the performance tests with ultraviolet light of Example 2-3, Comparative example 2-1, and Comparative example 2-2.
Fig. 6 is the X-ray diffraction diagram of the photocatalyst composition of Example 4-1.
Fig. 7 is the X-ray diffraction diagram of the photocatalyst composition of Example 4-2.
Fig. 8 is the X-ray diffraction diagram of the photocatalyst composition of Example 4-3.
Fig. 9 is the X-ray diffraction diagram of ZSM-5.

### BEST MODE FOR CARRYING OUT THE INVNETION

The photocatalyst composition of the present invention is characterized in that the primary particle diameter of the crystal is 10 to 100 nm and the tungsten oxide whose crystal structure measured by X-ray diffraction is WOₓ (2.5≦X≦3.0) is contained. Here, the above-mentioned "the primary particle diameter of the crystal" means the primary particle diameter of the crystal in the tungsten oxide that is calculated by the use of the expression of Scherrer based on the measurement results with the X-ray diffraction method.

When the primary particle diameter of the tungsten oxide crystal is less than 10 nm, the crystallization is insufficient and a high performance with visible light might not be obtained easily. Though the cause is not clear, it is presumed that the recombination of the electron and the hole is promoted. On the other hand, when the primary particle diameter is more than 100 nm, the contact with the carrier (though it will be described later in detail, with the titanium oxide and the like in the first aspect, and with the porous inorganic oxide in the second aspect) on which the tungsten oxide is supported tends to become insufficient, and decreasing in the performance with visible light might be occurred. The primary particle diameter is preferably 10 nm or more and more preferably 15 nm or more, and is preferably 80 nm or less and more preferably 50 nm or less.

Further, the aspects of the photocatalyst composition of the present invention comprises the first aspect that contains the tungsten oxide represented by X=3.0, that is, WO₃ among the above-mentioned tungsten oxide WOₓ (2.5≦X≦3.0) and the second aspect that contains the tungsten oxide of 2.5 or more to less than 3.0 in X (2.5≦X<3.0). In each aspect, the primary particle diameter of the tungsten oxide crystal is preferable to be 10 to 100 nm.

### <The photocatalyst composition of the first aspect>

The photocatalyst composition of the present invention relating to the first aspect is the one including the tungsten oxide having the specific primary particle diameter, and preferably the one including a titanium oxide, or the titanium oxide and iron oxide, in addition to the above-mentioned tungsten oxide. The specific mode of the photocatalyst composition of the present invention which relates to the first aspect include (1) the mode where the titanium oxide is a carrier and the tungsten oxide is supported on the carrier, (2) the mode where the tungsten oxide and the iron oxide are supported on the titanium oxide carrier, (3) the mode containing the titanium oxide and the tungsten oxide photocatalyst where the tungsten oxide is supported on a carrier different from the titanium oxide.

In the photocatalyst composition of either the above-mentioned (1) to (3) modes, the tungsten oxide is preferable to exist practically in the mode of the orthorhombic tungsten trioxide (WO₃). It can be confirmed by the X-ray diffraction measurement that the tungsten oxide is in the mode of the orthorhombic tungsten trioxide, and when the orthorhombic tungsten trioxide (WO₃) exists, strong peaks can be confirmed in the Bragg angles (2θ±0.2°) of 23.1°, 23.7°, 24.1°, 33.4°, 34.0° in the diagram showing X-ray diffraction measurements with radiation source of CuKα.

All of the tungsten oxides contained in the photocatalyst of the present invention need not be in the mode of the orthorhombic tungsten trioxide, and it is preferable that 60% or more and preferably 80% or more of the tungsten oxide is the orthorhombic tungsten trioxide WO₃. Further, it is known that the tungsten oxide becomes the oxide of 2 to 6 valents by the raw material used, the preparation method, and the like, and though it may become WO, W₂O₃, W₄O₁₁, WO₂, W₂O₅, W₃O₈, W₅O₁₄, and WO₃, in the present invention, it is preferable that the crystal structure of the tungsten oxide is WOₓ and X is in the range of 2.5 or more and 3.0 or less, and that the tungsten oxide having the crystal structure of WO₃ exists in the amount mentioned above.

Further, though the detailed reason why the photocatalyst composition of the present invention has the excellent performance with visible light is unclear, it is presumed that the electron generated on the orthorhombic tungsten trioxide with a visible light irradiation shifts to titanium oxide particles to promote the charge separation and consequently increase the quantum efficiency. Therefore, the mode of the above-mentioned (1) or (2) in which the tungsten oxide is supported on the titanium oxide as the carrier is the preferable embodiment of the present invention.

If the above-mentioned tungsten oxide is excited by the visible light of 420 nm or more, it may contain tungsten oxides including the ones that a tungsten compound is impregnated in a porous inorganic oxide other than the titanium oxide and fired, composite oxides of tungsten and another metallic element, and the ones that tungsten is doped with a platinum group metal or a transition metal oxide.

In the photocatalyst composition of the present invention, the titanium oxide means a titanium dioxide (TiO₂), and it is preferable to use an anatase-type titanium dioxide as the titanium dioxide. Moreover, in the present invention, titanium compound oxides such as titanium-silicon and titanium-zirconium that are known to have the same light semiconductivity as the anatase-type titanium oxide (see JP-B No.5-55184), titanium oxides in which metals such as chromium, vanadium, copper, and manganese are ion-implanted, titanium oxides doped with nitrogen, sulfur, and carbon, and titanium oxides doped with platinum group metals such as platinum, palladium, and rhodium and with transition metal oxides may be used in place of the above-mentioned titanium oxide. Therefore, the photocatalyst composition of the present invention may be the ones including oxides of silicon (Si), zirconium (Zr), and the like, and the above-mentioned various elements besides the tungsten oxide and the titanium oxide.

As the above-mentioned titanium oxides (including titanium compound oxides), the anatase-type titanium oxide of 30 to 200 m²/g in BET specific surface area is used suitably. It is more preferable to be 50 to 180 m²/g, and further preferable to be 80 to 160 m²/g. When the BET specific surface area is less than 30 m²/g, because the particle size of the tungsten oxide supported increases, the contact with the titanium oxide becomes insufficient and the enough catalytic performance is not obtained easily. On the other hand, when it is an amorphous titanium oxide of more than 200 m²/g in specific surface area, there is such fear that the titanium oxide is likely to make a solid solution with the tungsten oxide or the iron oxide at the time of firing.

In the photocatalyst composition of the present invention that relates to the above-mentioned modes of (1) and (2), the tungsten oxide (as WO₃) is preferable to exist at the rate of 10 to 100 parts by mass to 100 parts by mass of the titanium oxide (as TiO₂), and more preferable to exist at the rate of 20 to 50 parts by mass. When the compounding ratio of the tungsten oxide to 100 parts of the titanium oxide is less than 10 parts, the sufficient photocatalytic performance to visible light of 420 nm or more is not obtained easily, and when the compounding ratio exceeds 100 parts on the contrary, the crystal particle diameter of the tungsten oxide tends to be increased, and the effect of improving the performance with visible light by the increase in weight is not obtained easily, on the contrary, the performance with ultraviolet light might be decreased.

The photocatalyst composition of the present invention may contain iron oxide in addition to the above-mentioned tungsten oxide and titanium oxide. That is, the photocatalyst composition of the present invention which relates to the first aspect contains the mode (the above-mentioned mode (1)) containing the tungsten oxide and the titanium oxide and the mode (the above-mentioned mode (2)) containing the titanium oxide, the tungsten oxide, and the iron oxide.

Generally, though as for the crystalline morphology of iron oxide, it is known that there are various crystalline morphologies such as FeO, α-Fe₂O₃, and γ-Fe₂O₃, the iron oxide is preferably contained in the form of α-Fe₂O₃ in the photocatalyst of the present invention. More preferably, the iron oxide is preferably supported on the above-mentioned titanium oxide in the crystalline morphology of α-Fe₂O₃.

The photocatalyst composition in the above-mentioned mode (2) that contains the iron oxide is preferable to be the one that contains the tungsten oxide of 10 to 100 parts by mass and the iron oxide of 0.3 to 3 parts by mass to the titanium oxide of 100 parts by mass in the state of converting the titanium oxide, the tungsten oxide, and the iron oxide into TiO₂, WO₃, and Fe₂O₃ respectively, and more preferable to be the one that contains at the rate of 100 parts by mass (the titanium oxide): 20 to 50 parts by mass (the tungsten oxide): and 0.5 to 1 part by mass (the iron oxide). When the rate of the tungsten oxide to 100 parts by mass of the titanium oxide is less than 10 parts by mass, the sufficient photocatalytic performance to visible light of 420 nm or more may not be obtained, on the other hand, when the tungsten oxide exceeds 100 parts by mass, it tends to become difficult to disperse and support the tungsten oxide on the titanium oxide, and the effect of increasing the tungsten oxide becomes small, in addition, the performance with ultraviolet light might be decreased. Moreover, when the rate of the iron oxide to 100 parts by mass of the titanium oxide is less than 0.3 parts by mass, the sufficient effect of the performance improvement may not be obtained for either visible light or ultraviolet light, on the other hand, even if the amount of the iron oxide used exceeds 3 parts by mass, the effect corresponding to the increase in weight is not recognized, on the contrary, the color tone also becomes deep, which is not preferable.

Though the aspect where the photocatalyst composition contains the iron oxide, and especially the aspect where the above-mentioned iron oxide is supported on the titanium oxide is the preferable aspect of the present invention as mentioned above, such a titanium oxide photocatalyst is obtained by supporting the iron oxide on the titanium oxide in the above-mentioned range that reveals the good photocatalytic performance even under the condition of cutting ultraviolet rays of 380 nm or less, and exerts, for example, a high oxidizing power that may oxidize acetaldehyde, which is a typical odor material, to even in carbon dioxide.

The above-mentioned rate of the tungsten oxide and the iron oxide is preferable to be Fe/W (molar ratio) = 0.03/1 to 0.3/1, and more preferable to be 0.05/1 to 0.2/1. It is presumed that the charge separation and the charge transfer of the tungsten oxide and the titanium oxide are promoted by supporting the iron oxide together with the tungsten oxide on the titanium oxide particles, and as a result the quantum yield improves further. Therefore, the photocatalyst composition that has an excellent photocatalytic performance for both visible light and ultraviolet light is obtained by supporting the tungsten oxide and the iron oxide on the titanium oxide particles within the above-mentioned range.

Though the photocatalyst compositions in the modes of the above-mentioned (1) and (2) is produced by various methods including the powder mixing method, the powder mixing and high temperature sintering method, the impregnation method, the coprecipitation method, and the sol-gel method, among them, the impregnation method is suitably used. For example, in case of producing the photocatalyst composition in the above-mentioned mode (1) by the impregnation method, the photocatalyst composition is obtained by impregnating a tungsten compound solution in titanium oxide particles, and being dried and fired the obtained titanium oxide particle, and in case of the photocatalyst composition in the above-mentioned mode (2), it is obtained by impregnating the solution containing a tungsten compound and an iron compound in titanium oxide particles, and then being dried and fired the obtained titanium oxide particle. In addition, in case of the photocatalyst composition in the mode (2), the titanium oxide on which iron oxide has been supported in advance by impregnation, vapor deposition, sputtering, or the like may be used.

Though the firing temperature is not limited as long as the crystal structure of the anatase-type titanium oxide can be maintained, it is preferable to be 500 to 800°C, and more preferable to be 600 to 750°C. When the firing temperature is less than 500°C, the crystallization of the tungsten oxide and the iron oxide becomes insufficient, and the sufficient visible light-responsive performance might not be obtained easily. On the other hand, when the firing temperature exceeds 800°C, the phase transition from the rhombic crystal to the tetragonal crystal may occur, remarkable particle growth is caused and a significant performance decrease might be caused in the tungsten oxide.

The above-mentioned titanium oxide particle is not especially limited as long as it has the anatase-type crystal structure and the above-mentioned specific surface area, any of commercially available anatase-type titanium oxides and anatase-type titanium oxides produced by conventionally well-known methods, for example, the sulfuric acid method, the chlorine method, or the hydrolysis method may be used.

Various raw materials from which a tungsten oxide may be formed by firing, hydrolysis, and the like may be used as the above-mentioned tungsten compound. Specifically, inorganic and organic tungsten compounds including a tungstic acid, a tungsten chloride, an ammonium paratungstate, an ammonium metatungstate, and a tungstoisopropyloxide may be used. Among the above-mentioned tungsten compounds, the aqueous solution of an ammonium metatungstate is suitably used. The ammonium metatungstate easily forms an orthorhombic tungsten oxide excellent in crystallinity by firing, and an excellent photocatalytic performance with visible light is obtained.

Various raw materials from which an iron oxide may be formed by firing, hydrolysis, and the like may be used as the above-mentioned iron compound. For example, inorganic and organic iron salts including iron chloride, iron nitrate, iron sulfate, iron acetate, and iron oxalate may be used.

Next, the photocatalyst composition of the mode (3) will be described. As mentioned above, the photocatalyst composition in the mode (3) is comprised of a titanium oxide and the one that a tungsten oxide is supported on a carrier different from the titanium oxide. Further, in the following description, the photocatalyst containing a titanium oxide might be called a titanium oxide photocatalyst and the photocatalyst containing a tungsten oxide be called a tungsten oxide photocatalyst.

In the above-mentioned mode (3), it is particularly preferable to use a titanium oxide visible light-responsive photocatalyst that acts with visible light of 380 nm or more as a titanium oxide photocatalyst. Effectively using the high oxidizing power and stability possessed by the titanium oxide photocatalyst and the excellent visible light response possessed by the tungsten oxide photocatalyst, it is possible to obtain a highly practical visible light composite photocatalyst composition that exerts an excellent photocatalyst performance for a long term by irradiating visible light.

In the above-mentioned visible light composite photocatalyst composition, when the total amount of the titanium oxide photocatalyst and the tungsten oxide photocatalyst is 100% by mass, the content of the tungsten oxide photocatalyst is preferably in the range of 5 to 95% by mass. When the content of the tungsten oxide photocatalyst in the visible light composite photocatalyst composition is less than 5% by mass, the wavelength region of the visible light that is effectively used might narrow, and the difference of the reaction speed compared with a conventional photocatalyst might become small. On the other hand, when the content exceeds 95% by mass, the decomposition of the by-product becomes rate-limiting factor, and there may be a case to cause the decrease in the reaction speed. The more preferable content of the tungsten oxide photocatalyst is 20 to 60% by mass.

The visible light composite photocatalyst composition of the present invention contains at least two kinds of visible light-responsive photocatalysts of a titanium oxide photocatalyst and a tungsten oxide photocatalyst. In addition to the above-mentioned two kinds of photocatalysts, plural photocatalysts that respond with ultraviolet light and visible light may be added if necessary.

The titanium oxide photocatalyst contained in the above-mentioned visible light composite photocatalyst composition which is excited by irradiating near-ultraviolet visible light of 380 nm or more may be employed, and photocatalysts based on the titanium oxide including the ones that metals such as chromium, vanadium, copper, and manganese are ion-implanted, the ones doped with nitrogen, sulfur, and carbon, and the ones doped with platinum group metals such as platinum, palladium; and rhodium and with transition metal oxides may be used. In particular, it is preferable to use the titanium oxide on which iron oxide is supported at the rate of 0.3 to 5 parts by mass to the titanium oxide of 100 parts by mass. The titanium oxide supporting iron oxide in the above-mentioned range reveals the good photocatalytic performance under the condition of cutting wavelengths of 380 nm or less, and exerts a high oxidizing power that oxidizes acetaldehyde to carbon dioxide. Moreover, supporting iron oxide on the titanium oxide is preferable because it needs neither a complex producing process nor a large scale producing device like the case of carrying out the nitrogen doping and the ion implantation, and it can be adjusted easily.

When a fluorescent lamp is used as a source of light, because several percent of ultraviolet rays of 380 nm or less are included in the light originated from the fluorescent, the titanium oxide is excited and the photocatalytic effect is obtained as a result. However, as for°the domestic interior illumination, a lot of fluorescent lamps are covered with plastic covers, and ultraviolet rays of 380 nm or less are almost cut in this case, so it becomes almost impossible to exert the photocatalytic performance for the usual titanium oxide. Therefore, the titanium oxide photocatalyst excited with visible light of 380 nm or more is preferably used to obtain the photocatalytic effect indoors. The above-mentioned titanium oxide photocatalyst has a strong oxidizing power because the titanium oxide photocatalyst has the band structure of titanium oxide as a base basically, and by-products such as acetic acid are hardly formed and acetaldehyde can be oxidized and decomposed to carbon dioxide. However, extending visible light responsiveness (exerting the visible-responsive performance in the wide visible light region) is difficult, and it is the present situation that the photocatalyst performance is hardly obtained by a titanium oxide photocatalyst under the condition of cutting wavelengths of 420 nm or less.

Next, as a tungsten oxide photocatalyst, it is preferable to use the photocatalysts containing the tungsten oxide and being excited with visible light of 420 nm or more such as tungsten oxides including the above-mentioned orthorhombic tungsten trioxide, the ones that a tungsten compound is impregnated in a porous inorganic oxide other than the titanium oxide and fired, composite oxides of tungsten and other metallic elements, and tungsten oxides doped with any of platinum group metals and transition metal oxides. Though the valence of the tungsten oxide may be divalent to hexavalent by the raw material used, the preparative procedure, and the like as mentioned above, in the photocatalyst composition of the present invention that relates to the above-mentioned mode (3), the tungsten oxide preferably has WOₓ (2.5≦X≦3.0) crystal structure, and more preferably has WO₃ crystal structure among them.

The above-mentioned tungsten oxide photocatalyst is preferable to be a mode in which the tungsten oxide is supported on a porous inorganic oxide, and the above-mentioned porous inorganic oxide is preferable to be the hydrophobic zeolite. As for the tungsten oxide photocatalyst in this case, it is preferable that the tungsten oxide is supported on a hydrophobic zeolite in the rate of 3 to 100 parts by mass to the hydrophobic zeolite of 100 parts by mass. The tungsten oxide tends to easily become a giant particle with a small specific surface area because of its high crystallinity and to cause the performance deterioration by the adhesion of by-products as mentioned above in a usual preparative procedure. However, if the tungsten oxide is supported on the hydrophobic zeolite, it becomes easy to obtain the tungsten oxide having a small primary particle diameter because the tungsten oxide particles are dispersed in the two-dimensional and three-dimensional network structures of the zeolite. In addition, because the porous structure is maintained even if the content ratio of the tungsten oxide is raised greatly, the effect of the significant improvement in the photocatalytic activity is obtained. Moreover, not only the adsorptivity to harmful gas components is raised but also the speed of the photocatalytic reaction is remarkably improved by supporting the tungsten oxide on the hydrophobic zeolite. Furthermore, the desorption of by-products is inhibited and it also becomes easy to progress the total oxidation to carbon dioxide. When the amount of the tungsten oxide supported to 100 parts by mass of the hydrophobic zeolite is less than 3 parts by mass, the photocatalytic activity per unit mass of the tungsten oxide photocatalyst might become insufficient. On the other hand, when the amount of the tungsten oxide supported exceeds 100 parts by mass, the photocatalyst tends to cause decrease in the dispersibility, and to become difficult to obtain the effect of supporting on the above-mentioned zeolite.

The above-mentioned hydrophobic zeolite includes zeolites of various structures such as Y-type, β-type, mordenite, and ZSM-5. Even the zeolite containing any cation such as H (proton)-type, Na-type, and NH₄-type, and the like, can be used. Moreover, the high silica zeolite whose molar ratio of SiO₂/Al₂O₃ is 20 or more is preferably used. As an especially preferable hydrophobic zeolite, ZSM-5 that the specific surface area is 300 m²/g or more and the molar ratio of SiO₂/Al₂O₃ is in the range of 50 to 90 is exemplified. It is preferable to use ZSM-5 having the above-mentioned characteristics because the removal performances of typical room VOC (volatile organic compounds) components such as acetaldehyde and formaldehyde are remarkably improved.

The above-mentioned visible light composite photocatalyst composition is prepared by mixing a titanium oxide photocatalyst that is excited with visible light of 380 nm or more and a tungsten oxide photocatalyst that is excited with visible light of 420 nm or more with several methods such as the one for mixing them in the powder state with a kneader, a blender, a mixer, or the like, the one for mixing them with a dry or wet grinder using a ball mill and the like, and the one for dispersing and mixing them at the time of preparing paints or coating agents.

As the above-mentioned titanium oxide photocatalyst, those based on titanium oxides including the ones that metals such as chromium, vanadium, copper, and manganese are ion-implanted, the ones doped with nitrogen, sulfur, and carbon, and the ones doped with platinum group metals such as platinum, palladium, and rhodium and with transition metal oxides, and the titanium oxide supporting iron oxide may be used. Further, the implantation of various ions and the doping of the above-mentioned platinum group metals and transition metal oxides may be carried out according to the conventionally well-known methods.

In addition, as the methods for supporting the iron oxide on the titanium oxide, methods such as the impregnation, the vapor deposition, and the sputtering, can be used. Moreover, the above-mentioned iron oxide can use iron compounds similar to the photocatalyst composition of the above-mentioned (1) and (2) as a raw material.

As the method for supporting the tungsten oxide on the hydrophobic zeolite, the impregnation method, the kneading method, the ion exchange method, the ion implantation method, the vapor deposition method, and the like can be used. As the tungsten source, any of the metallic tungsten, the tungsten oxide, the tungsten chloride, the tungstic acid, the ammonium paratungstate, the ammonium metatungstate, the tungstoisopropyloxide, or the like is selected arbitrarily according to the supporting method. Among the above-mentioned methods, the impregnation method is preferable. Specifically, the solution of a tungsten compound that is the precursor to the tungsten oxide is impregnated in the hydrophobic zeolite, and the obtained hydrophobic zeolite is dried, and fired.

Though the firing temperature is selected arbitrarily according to the raw material to be used, for example, when the aqueous ammonium metatungstate solution is used as a tungsten compound, after this aqueous solution is impregnated in zeolite and dried, the dried product is fired at 200 to 600°C in air to give a tungsten oxide photocatalyst in which the tungsten oxide is supported on the hydrophobic zeolite.

### <The photocatalyst composition of the second aspect>

Next, the photocatalyst composition of the present invention that relates to the second aspect will be described. The photocatalyst composition of the present invention that relates to the second aspect is characterized in that the composition contains the tungsten oxide having the specific primary particle diameter and the above-mentioned tungsten oxide has the specific crystal structure.

The present inventors zealously advanced the research and consequently found that the photocatalyst composition containing the tungsten oxide that at least the peak assumed to attribute to the crystal of WOₓ (2.5≦X<3.0) is detected in the X-ray diffraction analysis reveals an excellent photocatalytic function by the irradiation of visible light of 380 nm or more, resulting in the completion of the present invention.

In the decomposition reaction of acetaldehyde, the visible light-responsive photocatalyst composition of the present invention including the tungsten oxide having the above-mentioned crystal structure promotes the total oxidation to carbon dioxide smoothly with little by-product such as the acetic acid similarly to the case of the titanium oxide photocatalyst. The difference with the photocatalyst composition including the tungsten trioxide (WO₃) relating to the above-mentioned first aspect is possibly presumed to be the following though details are unclear. Though the tungsten trioxide WO₃ has narrow band gaps compared with tungsten oxide having the crystal structure of WOₓ (2.5≦X<3.0) and the oxidizing power of active oxygen species formed is weak compared with the case of the titanium oxide and consequently the decomposition of the acetic acid becomes rate-limiting factor, in case of the tungsten oxide having the WOₓ (2.5≦X<3.0), the band gap widens and active oxygen species having the strong oxidizing power that can decompose the acetic acid rapidly are formed, and consequently the tungsten oxide became to be able to decompose acetaldehyde rapidly by visible light without causing the performance deterioration owing to the accumulation of acetic acid.

Moreover, the tungsten trioxide WO₃ tends to dissolve easily in an aqueous alkaline solution, while the photocatalyst including the tungsten oxide having the crystal structure of WOₓ (2.5≦X<3.0) has been confirmed that it can be remarkably inhibited to dissolve in an aqueous alkaline solution and has a characteristic obviously different from the tungsten trioxide.

The X-ray diffraction analysis in the present invention was performed using CuKα as a radiation source under the following conditions.

### <<X-ray diffraction analysis>>

Device: X-ray diffraction device X'Pert Pro (manufactured by PHILIP Corp.)
X-ray tube voltage: 45kV
Tube current: 40mA
Sampling width: 0.017 degree
Counting time: 5.08 seconds

Further, the crystal structure of the tungsten oxide can be confirmed according to powder X-ray diffraction data PDF edited by JCPDS of International Center of Diffraction Data ICDD. Those having the crystal structure of WOₓ (2.5≦X<3.0) described in the powder X-ray diffraction data PDF include W₂₅O₇₃, W₂₀O₅₈, W₂₀O₅₆, W₂₄O₆₈, W₁₈O₄₉, W₁₇O₄₇, and W₃₂O₈₄. It is preferable that the photocatalyst composition of the second aspect includes the tungsten oxide having not less than one kind of crystal structure selected from the group consisting of W₂₄O₆₈ (X=2.83), W₂₀O₅₈ (X=2.90), and W₂₅O₇₃ (X=2.92) among tungsten oxides having the above-mentioned crystal structures.

In general, the compound being called the tungsten oxide is the tungsten trioxide WO₃ of hexavalent, which is lemon yellow and orthorhombic crystalline powder and extremely stable in air. As for tungsten oxides, it is assumed that there are those of divalent to hexavalent in valence including those not clear in the existence, and that for example, if the tungsten oxide of hexavalent is reduced with hydrogen, it is reduced even to metallic tungsten through oxides of various intermediate oxidation numbers. The tungsten oxides of the present invention in which X is 2.5 or more and less than 3.0 correspond to those of being pentavalent or more and less than hexavalent in valence, and can be produced by reducing the orthorhombic tungsten oxide under relatively mild conditions. Further, when the reduction is carried out until X becomes less than 2.5, remarkable decrease in the photocatalytic activity is caused, so that such reduction is undesirable. Moreover, the tungsten oxide is not needed to be a single crystal type, and a part of the orthorhombic tungsten trioxide WO₃ (X=3.0) may be contained as long as a peak assumed to attribute to the crystal structure of WOₓ (2.5≦X<3.0) will be detected in the above-mentioned X-ray diffraction analysis in which X is 2.5 or more and less than 3.0.

Generally, the tungsten oxide has high specific gravity, and is difficult to form minute pores and becomes giant particles easily. Accordingly, the photocatalyst composition of the present invention that relates to the second aspect is preferable to use a porous inorganic oxide and the like that the specific surface area is large and the heat resistance is excellent as a carrier. That is, the photocatalyst composition of the second aspect also includes the photocatalyst composition containing the above-mentioned tungsten oxide WOₓ (2.5≤X<3.0) and porous inorganic oxide. Microscopic particles of the tungsten oxide are obtained and the improvement of the photocatalyst performance is obtained by dispersing the tungsten oxide in the porous inorganic oxide.

The above-mentioned porous inorganic oxides include active alumina, silica, silica-alumina, zeolite, a zirconium oxide, a titanium oxide, a titanium-silica compound oxide, and a titanium-zirconium compound oxide and the like. In particular, zeolite is preferable.

As the photocatalyst composition relating to the second aspect, those containing the tungsten oxide that at least the crystal peak of WOₓ (2.5≤X<3.0) is detected in X-ray diffraction analysis and a porous inorganic oxide are preferable, and among them, the ones that contain the above-mentioned tungsten oxide WOₓ at the ratio of 3 to 100 parts by mass to the porous inorganic oxide of 100 parts by mass is preferable. When the content ratio of the tungsten oxide exceeds 100 parts by mass to 100 parts by mass of the porous inorganic oxide, the deterioration of the dispersibility might be caused. On the other hand, when the content ratio of the tungsten oxide is less than 3 parts by mass, the sufficient photocatalytic performance might not be obtained easily.

As the above-mentioned porous inorganic oxide, zeolite is preferable, and natural and synthesized zeolites in various structures such as A-type, X-type, Y-type, β-type, mordenite, and ZSM-5 may be used. Moreover, though any cation of H (proton)-type, Na-type, NH₄-type, and the like may be used, H-type is especially preferable. Moreover, the hydrophobic high silica zeolite whose molar ratio of SiO₂/Al₂O₃ is 20 or more is preferably used.

Though the content ratio of the tungsten oxide to the total mass of the photocatalyst composition is preferably increased to improve the performance of the photocatalyst, when the content ratio of the tungsten oxide is increased, because the tungsten oxide has crystallinity, it becomes easy to cause the performance deterioration owing to the pore blockage or the particle growth. From this standpoint, if zeolite is used as a carrier, it is possible to enhance the content ratio of the tungsten oxide compared with a common porous inorganic oxide, and it is presumed for the growth of the tungsten oxide particles to be inhibited by being dispersed in the two-dimensional and three-dimensional network structures of zeolite.

Among various zeolites, it is preferable to use ZSM-5 that the specific surface area is 200 m²/g or more and the molar ratio of SiO₂/Al₂O₃ is in the range of 50 to 90, and it is most preferable to use the hydrogen type ZSM-5. Though the reason why ZSM-5 is especially excellent is not clear, it is presumed that ZSM-5 with the above-mentioned physical properties has a three-dimensional network structure suitable for minutely supporting the tungsten oxide. Moreover, it is considered that there is an effect of becoming easy to obtain the crystal structure of WOₓ (2.5≦X<3.0) characterizing the present invention with the reduction processing by minutely supporting the tungsten oxide on ZSM-5.

Moreover, the photocatalyst composition of the present invention may contain a photocatalyst other than the tungsten oxide WOₓ supported on a porous inorganic oxide (hereafter, the photocatalyst composition consisting of the tungsten oxide WOₓ and the porous inorganic oxide might be called the tungsten oxide WOₓ photocatalyst). Such photocatalysts include, for example, titanium oxide photocatalysts. As the titanium oxide photocatalyst, it is preferable to use the one that is excited with the visible light of 380 nm or more as described in the above-mentioned first aspect (the mode of (3)), and especially it is recommended to use the one supporting iron oxide. Moreover, as for the ratio of content of the titanium oxide photocatalyst, when the total amount of the titanium oxide photocatalyst and the above-mentioned tungsten oxide WOₓ photocatalyst is made to be 100% by mass, the ratio of content of the tungsten oxide WOₓ photocatalyst is preferably made to be in the range of 5 to 95% by mass.

Next, the process for producing the visible light-responsive photocatalyst composition of the present invention that relates to the second aspect will be described. The tungsten oxide having the above-mentioned crystal structure contained in the photocatalyst composition of the present invention is obtained by heat-treating the tungsten oxide and/or the tungsten oxide precursor under the reducing atmosphere. The above-mentioned tungsten oxide precursors include tungsten compounds such as the tungsten chloride, the tungstic acid, the ammonium paratungstate, the ammonium metatungstate, and the tungstoisopropyloxide, or the aqueous solutions of the above-mentioned tungsten compounds. Further, these tungsten compounds are suitably selected and used according to the support method to be described later, for example, when the impregnation method is adopted, it is preferable to use the aqueous ammonium metatungstate solution.

As the heat-treatment under the reducing atmosphere, it is heat-treated the tungsten oxide or the tungsten oxide precursor in an electric furnace and the like where reducing gases such as hydrogen, carbon monoxide, and propane are introduced, and the visible light-responsive photocatalyst composition that contains the tungsten oxide having the crystal peak of WOₓ (2.5≦X<3.0) in the X-ray diffraction analysis is produced by such heat-treatment. Moreover, the tungsten oxide precursor may be subjected to the heat-treatment under the reducing atmosphere after being fired once under the oxidizing atmosphere such as in air to produce the tungsten trioxide (WO₃). Or, the tungsten oxide that has the above-mentioned crystal structure can also be produced by adding a combustible compound such as a liquid or solid organic compound or carbon to the composition containing the tungsten oxide or the tungsten oxide precursor and by heat-treating the combustible compound in the presence of oxygen to decompose it. Thus, the process for producing the visible light-responsive photocatalyst composition containing the tungsten oxide WOₓ (2.5≦X<3.0) that has the above-mentioned crystal structure is not limited and various methods can be adopted besides the above-mentioned method of conducting the reduction treatment at the same time as the firing.

Though the heat-treatment is suitably selected by the reduction means to be used, it is preferably conducted at temperatures of 200 to 600°C. As for the tungsten oxide, because the deterioration of the performance with visible light is caused when the reduction proceeds further over pentavalent, it is preferable to use a mild reduction method without raising the heating temperature so much.

The photocatalyst composition of the present invention that relates to the second aspect contains the visible light-responsive photocatalyst including the tungsten oxide WOₓ (2.5≦X<3.0) and a porous inorganic oxide as mentioned above, and the preferable aspect is supporting the tungsten oxide having the above-mentioned crystal structure on the porous inorganic oxide. As the method for supporting the above-mentioned tungsten oxide, the impregnation method, the kneading method, the ion exchange method, the ion implantation method, the vapor deposition method, and the like may be used, and particularly the impregnation method is preferably adopted.

Hereinafter, the case of producing the photocatalyst composition containing a photocatalyst composition relating to the second aspect with the adoption of the impregnation method will be described specifically. First of all, an aqueous ammonium tungstate solution as the tungsten oxide precursor is impregnated in a porous inorganic oxide that is a carrier (the photocatalyst composition precursor). Next, the photocatalyst including the tungsten oxide having the above-mentioned crystal structure is produced by heat-treating this under the reducing atmosphere.

In addition, as for the heat-treatment under the above-meritioned reducing atmosphere, after the photocatalyst composition precursor that the aqueous ammonium tungstate solution has been impregnated in the porous inorganic oxide is dried at about 100°C to evaporate moisture, the heat-treating is preferably conducted in an electric furnace where reducing gases such as hydrogen, carbon monoxide, and propane is introduced. Though the heating temperature is suitably selected according to the reduction means to be used, it is sufficient to conduct at temperatures of 200 to 600°C. The visible light-responsive photocatalyst composition having the crystal structure of the present invention is produced herewith.

Moreover, in the above-mentioned producing process, it is preferable to use the aqueous tungstic acid compound solution in which at least one kind of organic carboxylic acid selected from the oxalic acid, the citric acid, the tartaric acid, the phthalic acid, the maleic acid, and the malic acid is added. The above-mentioned organic carboxylic acid remains without decomposing in the drying treatment (at 100 to 150°C) before the heat-treatment and decomposes at the time of heat-treating (firing) (at 200 to 600°C) under the oxidizing atmosphere, so that the heating atmosphere is substantially changed to a reducing atmosphere. Therefore, when the aqueous tungsten oxide compound solution in which the above-mentioned organic carboxylic acid has been added is used, a part of the tungsten oxide is reduced at the time of the heat-treatment (firing) and a tungsten oxide having the valence of pentavalent or more to less than hexavalent is formed on the porous inorganic oxide. That is, if the above-mentioned organic carboxylic acid is used, the reduction treatment of the tungsten oxide is conducted under air without using dangerous reducing agents such as hydrogen and carbon monoxide. Further, if the oxygen concentration is decreased by putting the photocatalyst composition precursor after the drying treatment into a container and covering it at the time of the heat-treatment, the reduction treatment is conducted more efficiently.

The photocatalyst composition of the present invention that contains the tungsten oxide having the above-mentioned specific crystal structure acts with visible light of 420 nm or more and efficiently decompose various organic compounds such as formaldehyde and acetaldehyde even with weak indoor light, and is also excellent in chemical stability. Moreover, the photocatalyst having the above-mentioned characteristics is easily produced according to the production process of the present invention.

In addition, when the photocatalyst composition of the second aspect contains a titanium oxide photocatalyst, the process for producing the titanium oxide photocatalyst concerned is not especially limited, and may be prepared by the process similar to that described in the above-mentioned first aspect. Moreover, the method for mixing the above-mentioned titanium oxide photocatalyst and tungsten oxide photocatalyst is also not especially limited, and the method for mixing them in the powder state with a kneader, a blender, a mixer, or the like, the method for mixing them with a dry or wet grinder using a ball mill and the like, and the method for dispersing and mixing them at the time of preparing paints or coating agents may be adopted.

The photocatalyst composition of the present invention that relates to the above-mentioned first and second aspects decompose and remove harmful materials and odor materials in the air and exert excellent functions such as wastewater purification, fouling prevention, anti-bacterium, and mildew resistance by being coated on indoor and outdoor building materials and the like and by using the sunlight and the indoor light. Particularly, because the photocatalyst composition of the present invention acts effectively to visible light of 420 nm or less, the excellent effect of the photocatalyst is obtained under the indoor lighting that did not obtain enough effect so far. The products that the photocatalyst composition of the present invention is applied indoors includes building materials such as ceiling materials, wallpaper, floor materials, illuminators, furniture, and tiles, clothes, curtains, carpets and futons. Particularly, the degradation characteristic with visible light for acetaldehyde and formaldehyde is excellent, and the photocatalyst composition is also used suitably as countermeasure to the sick building syndrome and the revised building code. Moreover, because the sunlight can be effectively used in even outdoor, it is preferably used also for road surfaces, blocks, bricks, sound insulating walls, shading walls, building sidewalls, roofs, panes, guardrails, road traffic signs, car bodies, ship bottoms, and the like.

Hereinafter, though the present invention will be described more specifically citing examples, the present invention should not be limited originally by the following examples and also can be made a change suitably within the scope that may be complied with the purport mentioned above and later and be executed, and any of those changes is included in the technical scope of the present invention.

### EXAMPLES

### <<X-ray diffraction analysis>>

In the following Examples, the X-ray diffraction analysis (structural analysis) was conducted using CuKα as a radiation source under the following conditions.
Device: X-ray diffraction device X'Pert Pro (manufactured by PHILIP Corp.)
X-ray tube voltage: 45 kV
Tube current: 40 mA
Sampling width: 0.017 degree
Counting time: 5.08 seconds

After the above-mentioned X-ray diffraction analysis was done, the crystal structure of the tungsten oxide was identified according to powder X-ray diffraction data PDF edited by JCPDS of International Center of Diffraction Data ICDD.

The primary particle diameter of the crystal of the tungsten oxide was measured similarly to the above-mentioned X-ray diffraction analysis except for employing the sampling width 0.008 degree and the counting time 200 seconds, and was calculated based on the measurement result by the use of the expression of Scherrer.

### <Photocatalyst of the first aspect>

### <Example 1-1>

### <Photocatalyst composition of the mode (1) of the first aspect>

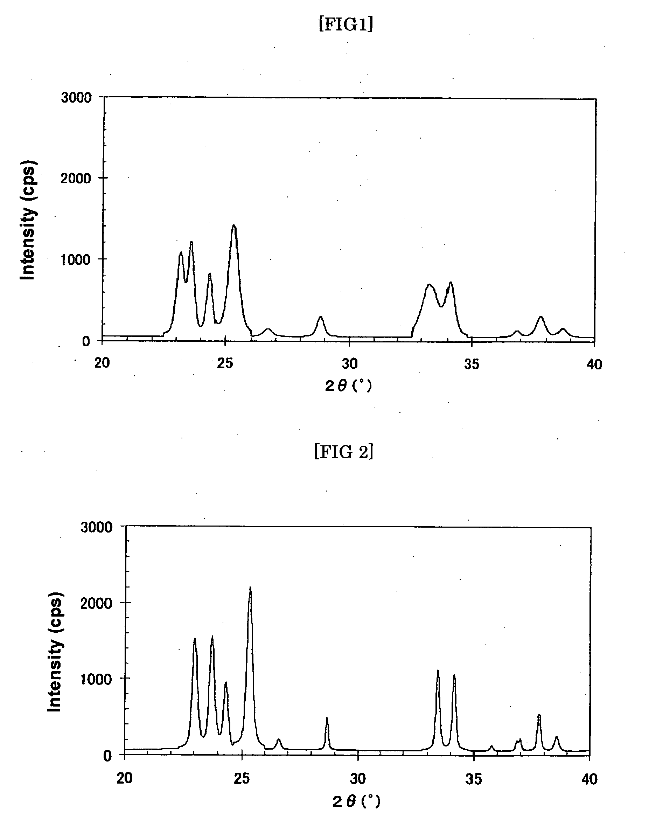

In the impregnating solution that 100 g of water was added in 50 g of a commercially available aqueous ammonium metatungstate solution (WO₃ reduced concentration of 50% by weight), 100 g of commercially available titanium oxide (the anatase-type TiO₂, the specific surface area of 82 m²/g, and manufactured by Millennium Chemicals Corp.) was added and mixed, and the mixed solution was dried at 100°C for five hours and then fired at 650°C for five hours. Thus, a powdery photocatalyst composition was obtained. As for this photocatalyst, 25 parts by mass of the tungsten oxide was supported to 100 parts by mass of the titanium oxide. It was confirmed by the X-ray diffraction measurement that the tungsten oxide existed as an orthorhombic tungsten trioxide and the primary particle diameter of the tungsten oxide was 38 nm. Fig. 1 shows the X-ray diffraction chart. The composition ratio, the firing temperature, the WO₃ crystal system, and the WO₃ primary particle diameter of the obtained photocatalyst composition are shown in Table 1.

### <Example 1-2>

A photocatalyst composition was obtained in the same way as Example 1-1, except that the firing temperature was changed to 750°C. As for this photocatalyst composition, 25 parts by mass of the tungsten oxide (WO₃) was supported to 100 parts by mass of the titanium oxide. It was confirmed by the X-ray diffraction measurement that the tungsten oxide existed as an orthorhombic tungsten trioxide and the primary particle diameter of the tungsten oxide was 76 nm. Fig. 2 shows the X-ray diffraction chart. The composition ratio, the firing temperature, the WO₃ crystal system, and the WO₃ primary particle diameter of the obtained photocatalyst composition are shown in Table 1.

### <Example 1-3>

A photocatalyst composition with a different content ratio of the tungsten oxide was prepared in the same way as Example 1-1, except that the amount of the aqueous ammonium metatungstate solution added was changed. The composition ratio, the firing temperature, the WO₃ crystal system, and the WO₃ primary particle diameter of the obtained photocatalyst composition are shown in Table 1.

### <Example 1-4>

A photocatalyst composition with a different content ratio of the tungsten oxide was prepared in the same way as Example 1-1, except that the amount of the aqueous ammonium metatungstate solution added was changed in Example 1-1. The composition ratio, the firing temperature, the WO₃ crystal system, and the WO₃ primary particle diameter of the obtained photocatalyst composition are shown in Table 1.

### <Example 1-5>

A composite oxide of titanium and silicon was prepared by the method to be described below. A solution "a" was prepared by adding 300 kg of aqueous ammonia (the concentration of 25%) and 400 kg of water in 20 kg of silica sol (NCS-30, manufactured by Nissan Chemical Industries, Ltd.). Next, a solution "b" was prepared by diluting 180 L of the aqueous sulfuric acid solution of titanyl sulfate (the TiO₂ concentration of 250 g/L and the total sulfuric acid concentration of 1100 g/L) with 250 kg of water. The solution "b" was gradually dropped while stirring the solution "a" and a coprecipitation gel was formed, and the gel was left standing for 15 hours. The obtained gel was filtered, washed by water, and dried at 200°C for 10 hours, and then the gel was fired at 550°C for six hours and a titanium-silicon composite oxide TS-1 was obtained. As for the composite oxide TS-1, the molar ratio of titanium and silicon was Ti/Si = 85/15 and the specific surface area was 155 m²/g.

A photocatalyst composition was obtained in the same way as Example 1-1, except for using the above-mentioned compound oxide TS-1 instead of the commercial available titanium oxide.

As for this photocatalyst composition, when the composition ratio of Ti/S in the above-mentioned titanium-silicon compound oxide TS-1 was reduced, 28 parts by mass of the tungsten oxide was supported to 100 parts by mass of the titanium oxide. It was confirmed by the X-ray diffraction measurement that the tungsten oxide existed as an orthorhombic tungsten trioxide and the primary particle diameter of the tungsten oxide was 30 nm. The composition ratio, the firing temperature, the WO₃ crystal type, and the WO₃ primary particle diameter of the obtained photocatalyst composition are shown in Table 1.

### <Reference example 1-1>

A photocatalyst composition was obtained in the same way as Example 1-1, except for using activated alumina (γ-alumina, the specific surface area of 150 m²/g, and manufactured by Sasol Corp.) instead of the titanium oxide in Example 1-1. The composition ratio, the firing temperature, the WO₃ crystal type, and the WO₃ primary particle diameter of the obtained photocatalyst composition are shown in Table 1.

### <Reference example 1-2>

A photocatalyst composition was obtained in the same way as Example 1-1, except for using a silicon dioxide (the specific surface area of 300 m²/g, and manufactured by Fuji Shirishia Chemicals Co., Ltd.) instead of the titanium oxide in Example 1-1. The composition ratio, the firing temperature, the WO₃ crystal type, and the WO₃ primary particle diameter of the obtained photocatalyst composition are shown in Table 1.

### <Comparative example 1-1>

A photocatalyst composition was obtained in the same way as Example 1-1, except for changing the firing temperature in Example 1-1. The composition ratio, the firing temperature, the WO₃ crystal type, and the WO₃ primary particle diameter of the obtained photocatalyst composition are shown in Table 1.

### <Comparative example 1-2>

A photocatalyst composition was obtained in the same way as Example 1-1, except for changing the firing temperature in Example 1-1. The composition ratio, the firing temperature, the WO₃ crystal type, and the WO₃ primary particle diameter of the obtained photocatalyst composition are shown in Table 1.

### <Comparative example 1-3>

The commercially available titanium oxide used in Example 1-1 was used.

### <Test example 1>

### «Photocatalytic performance test with visible light»

Regarding photocatalyst compositions obtained by Examples 1-1 to 1-5, Reference examples 1-1 to 1-2, and Comparative examples 1-1 to 1-3, the performance of decomposing acetaldehyde was measured by the following closed system test method. Each of the photocatalyst composition powder samples obtained by the above-mentioned Examples and Comparative examples was dispersed in ethanol, and the dispersion liquid was applied on the one side of a glass plate of 150×70 mm so that the amount of the photocatalyst composition applied became 20 g/m² and dried at 60°C, thus the test piece was made.

The above-mentioned test piece was put in a reaction vessel made of quartz of 5L. Next, after acetaldehyde was poured into the reaction vessel so that the initial gas concentration became 10 ppm, light was irradiated, and the acetaldehyde concentration in the reaction vessel after predetermined time had passed was measured by the gas chromatography and the photocatalyst performance was evaluated.

Two fluorescent lamps of 4W (Toshiba fluorescent lamp FL4D and daylight color, manufactured by Toshiba Lighting Technology Corp.) were used as the light source and irradiated aiming at the test piece from the outside of the reaction vessel. Further, the ultraviolet protection film (the trade name "UV Guard", manufactured by Fuji Photo Film Co., Ltd.) was pasted up on the lamp irradiation side of the reaction vessel, and the photocatalyst performance test with visible light was conducted on the condition that the ultraviolet rays of 420 nm or less was completely cut.

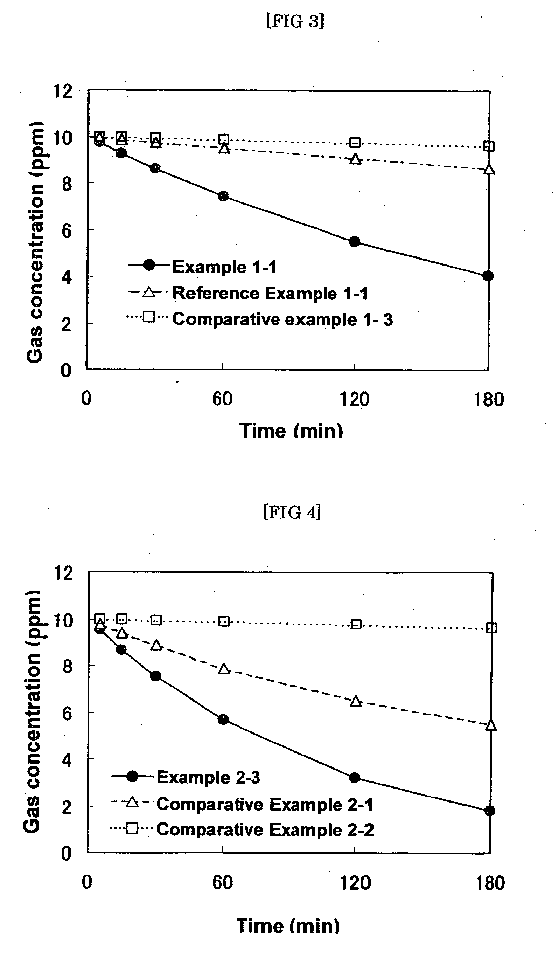

Table 1 shows the acetaldehyde concentration in the reaction vessel measured after 180 minutes had passed on each test piece. It is shown that the lower the gas concentration after the time passed, the more excellent the photocatalyst performance with visible light. Moreover, as for Example 1-1, Reference example 1-1, and Comparative example 1-3, the acetaldehyde concentration in the reaction vessel was measured every predetermined time passage. Fig. 3 shows the results.

**[Table 1]**

| | Composition ratio (part by mass) | Firing temperature | Tungsten oxide crystal system | Primary particle diameter of WO₃ (nm) | Photocatalytic performance with visible light (ppm) |
|---|---|---|---|---|---|
| Example 1-1 | TiO₂/WO₃ =100/25 | 650°C | Orthorhombic WO₃ | 38 | 4.0 |
| Example 1-2 | TiO₂/WO₃ =100/25 | 750°C | Orthorhombic WO₃ | 76 | 3.3 |
| Example 1-3 | TiO₂/WO₃ =100/15 | 650°C | Orthorhombic WO₃ | 25 | 4.8 |
| Example 1-4 | TiO₂/WO₃ =100/75 | 650°C | Orthorhombic WO₃ | 54 | 2.7 |
| Example 1-5 | TiO₂/SiO₂/WO₃ =100/14/28 | 650°C | Orthorhombic WO₃ | 30 | 3.2 |
| Reference example 1-1 | Al₂O₃/WO₃ =100/25 | 650°C | Orthorhombic WO₃ | 21 | 8.6 |
| Reference example 1-2 | SiO₂/WO₃ =100/25 | 650°C | Orthorhombic WO₃ | 10 | 8.8 |
| Comparative example 1-1 | TiO₂/WO₃ =100/25 | 300°C | Amorphous | <10 | 7.9 |
| Comparative example 1-2 | TiO₂/WO₃ =100/25 | 1000°C | Tetragonal WO₃ (partly including a solid solution) | 225 | 7.1 |
| Comparative example 1-3 | TiO₂ =100 | - | - | - | 9.6 |

From Table 1, when the tungsten oxide having the specific primary particle diameter and titanium oxide are contained (the photocatalyst compositions of Examples), it is understood that the photocatalytic performance with visible light is improved remarkably compared with the case of the single use of the titanium oxide (Comparative example 1-3) and the case of the use of the tungsten oxide supported on alumina, silicon dioxide, or the like (Reference examples 1-1 and 1-2). Moreover, from the results of Comparative example 1-1 and Comparative example 1-2, it is clear that the photocatalyst composition that contains the tungsten oxide having a specific crystal structure in a specific composition ratio disclosed by the present invention exerts an excellent photocatalytic performance.

Though a change with the passage of time of the acetaldehyde concentration in the reaction vessel was shown in Fig. 3, it is understood from this result that the reaction speed of the photocatalyst composition of Example 1-1 is 20 times or more to that of the conventional titanium oxide photocatalyst (Comparative example 1-3) under visible light irradiation conditions.

### <Example 2-1>

### <Photocatalyst composition of the mode (2) in the first aspect>

One hundred grams of water was added in 30 g of a commercially available aqueous ammonium metatungstate solution (WO₃ reduced concentration of 50% by mass) and then 2.5 g of ferric nitrate was dissolved therein, and thus an impregnating solution was prepared. In this impregnating solution, 100 g of a commercially available titanium oxide (the anatase-type titanium dioxide, the specific surface area of 82 m²/g, and manufactured by Millennium Chemicals Corp.) was put and mixed, and the mixed solution was dried at 100°C for five hours and then fired at 650°C for five hours. Thus, a photocatalyst composition was obtained. As for this photocatalyst composition, 15 parts by mass of the tungsten oxide and 0.5 parts by mass of the iron oxide were supported to 100 parts by mass of the titanium oxide. It was confirmed by the X-ray diffraction measurement that the tungsten oxide existed as an orthorhombic tungsten trioxide in the photocatalyst composition and the primary particle diameter of the tungsten oxide was 52 nm.

### <Example 2-2>

A photocatalyst composition was obtained in the same way as Example 2-1, except that the firing temperature was changed to 750°C. It was confirmed by the X-ray diffraction measurement that the tungsten oxide existed as an orthorhombic tungsten trioxide in the photocatalyst composition obtained at this time and the primary particle diameter was 73 nm.

### <Example 2-3>

A photocatalyst composition in which the content rate of each component is different was prepared in the same way as Example 2-1, except that the amounts of the ammonium metatungstate and the ferric nitrate used were changed in Example 2-1. It was confirmed by the X-ray diffraction measurement that the tungsten oxide existed as an orthorhombic tungsten trioxide in the photocatalyst composition obtained at this time and the primary particle diameter was 42 nm.

### <Example 2-4>

A photocatalyst composition in which the content rate of each component is different was prepared in the same way as Example 2-1, except that the amounts of the ammonium metatungstate and the ferric nitrate used were changed in Example 2-1. It was confirmed by the X-ray diffraction measurement that the tungsten oxide existed as an orthorhombic tungsten trioxide in the photocatalyst composition obtained at this time and the primary particle diameter was 64 nm.

### <Reference example 2-1>

A photocatalyst composition was obtained in the same way as Example 2-1, except that the ferric nitrate was not added in Example 2-1. It was confirmed by the X-ray diffraction measurement that the tungsten oxide existed as an orthorhombic tungsten trioxide in the photocatalyst composition obtained at this time and the primary particle diameter was 25 nm.

### <Comparative example 2-1>

A commercially available tungsten oxide (manufactured by Wako Pure Chemical Industries, Ltd.) was used. This tungsten oxide was observed by the use of a scanning electron microscope, and it was confirmed that the tungsten oxide used in Comparative example 2-1 had the particle diameter of several thousands of nanometers or more.

### <Comparative example 2-2>

The commercially available titanium oxide used in Example 2-1 was used.

The composition ratio, the firing temperature, the Fe/W (molar ratio), and the like of the above-mentioned photocatalyst composition are shown in Table 2.

### <Test example 2>

The test pieces of the photocatalyst compositions that were obtained by Examples 2-1 to 2-4, Reference example 2-1, and Comparative examples 2-1 to 2-2 were made by the same method as that in the above-mentioned Test example 1. Moreover, the performance of decomposing acetaldehyde was measured by the following closed system test method using the obtained test pieces.

The above-mentioned test piece was put in a reactor vessel made of quartz of 5L, and acetaldehyde was poured into so that the initial gas concentration became 10 ppm and light was irradiated aiming at the test piece. In addition, in each performance evaluation of the performance with visible light and the performance with ultraviolet light, the irradiation condition of light was changed as follows, and the acetaldehyde concentration in the reaction vessel was measured with time by the gas chromatography and the photocatalytic performance was evaluated.

### <<Photocatalytic performance test with visible light>>

Two fluorescent lamps of 4W (Toshiba FL4D daylight color, manufactured by Toshiba Lighting and Technology Corp.) were used as the light source and irradiated from the outside of the reaction vessel. Further, the ultraviolet protection film (the trade name "UV Guard", manufactured by Fuji Photo Film Co., Ltd.) was pasted up on the lamp irradiation side of the reaction vessel, and the photocatalytic performance test with visible light was conducted on the condition that the ultraviolet rays of 420 nm or less was completely cut. The acetaldehyde concentration in the reaction vessel after 180 minutes had passed was measured on each sample, and the result was shown in Table 2 as the photocatalytic performance with visible light. It is shown that the lower the gas concentration after the time passed is, the more excellent the photocatalytic performance with visible light is. Moreover, as for Example 2-3, Comparative example 2-1, and Comparative example 2-2, the acetaldehyde concentration in the reaction vessel was measured every predetermined time passage. The results are shown in Fig.4.

### «Photocatalytic performance test with ultraviolet light»

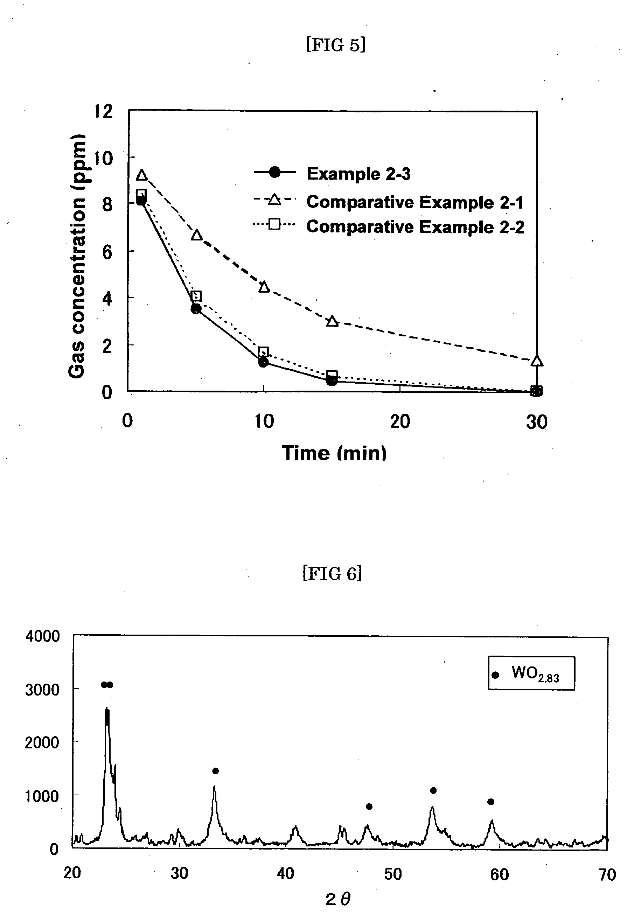

The photocatalytic performance test with ultraviolet light was conducted by the use of the black light of 4W (the trade name "FL4BLB", manufactured by Toshiba Lighting and Technology Corp.) as the source of light in the same way as the case of the above-mentioned performance with visible light, except that no ultraviolet protection film was pasted up on the surface of the reaction vessel corresponding to the black light irradiation side. Regarding each sample, the acetaldehyde concentration in the reaction vessel after the light irradiation of 30 minutes was measured. The results are shown in Table 2 as the photocatalytic performance with ultraviolet light. Moreover, as for Example 2-3, Comparative example 2-1, and Comparative example 2-2, the acetaldehyde concentration in the reaction vessel was measured every predetermined time passage. The results are shown in Fig.5.

**[Table 2]**

| | Composition ratio (part by mass) | Firing temperature | Fe/W (molar ratio) | Primary particle diameter of WO₃ (nm) | Photocatalytic performance with visible light (ppm) | Photocatalytic performance with ultraviolet light ultraviolet light |
|---|---|---|---|---|---|---|
| Example 2-1 | TiO₂/WO₃/Fe₂O₃ =100/15/0.5 | 650°C | 0 10 | 52 | 2.9 | 0.014 |
| Example 2-2 | TiO₂/WO₃/Fe₂O₃ =100/15/0.5 | 750°C | 0.10 | 73 | 2.2 | 0.007 |
| Example 2-3 | TiO₂/WO₃/Fe₂O₃ =100/25/1.0 | 650°C | 0.12 | 42 | 1.8 | 0.018 |
| Example 2-4 | TiO₂/WO₃/Fe₂O₃ =100/75/2.0 | 650°C | 0.08 | 64 | 1.5 | 0.051 |
| Reference example 2-1 | Al₂O₃/WO₃ =100/15 | 650°C | 0.00 | 25 | 4.8 | 0.428 |
| Comparative example 2-1 | WO₃ =100 | - | - | - | 5.5 | 1.351 |
| Comparative example 2-2 | TiOz =100 | - | - | - | 9.6 | 0.045 |

From the above-mentioned result, it is understood that the photocatalyst containing the tungsten oxide having a specific crystal structure, the titanium oxide, and the iron oxide exerts high catalytic activity under either condition of visible light irradiation and ultraviolet light irradiation compared with the case of the single use of the titanium oxide or the tungsten oxide.

### <Example 3-1>

### <Photocatalyst composition of the mode (3) in the first aspect>

Fifty grams of a titanium oxide (the specific surface area of 80 m²/g, the anatase-type, and manufactured by Millennium Chemicals Corp.) was added in 80g of aqueous ammonia of 1.2% by mass and stirred for one hour. After that, the aqueous solution that 5 g of a ferric nitrate was dissolved in 30 g of water was gradually dropped and the iron compound was deposited on the surface of the titanium oxide particles. After standing, the obtained product was filtered, washed, and dried at 150°C, and then heated at 350°C for 30 minutes in air and a titanium oxide photocatalyst A1 on which the iron oxide was supported was obtained. As for the photocatalyst A1, two parts by mass of the iron oxide was supported to 100 parts by mass of the titanium oxide.

Next, in the impregnating solution that 50 g of a commercially available aqueous ammonium metatungstate solution (WO₃ reduced concentration of 50% by weight) was diluted by 30 g of pure water, 50 g of ZSM-5 (the hydrogen type, the specific surface area of 420 m²/g, and SiO₂/Al₂O₃ [molar ratio] = 80) was put and mixed, and the mixed solution was dried at 100°C for five hours and then fired at 400°C for 30 minutes in air. The tungsten oxide photocatalyst B1 was thus obtained. As for the photocatalyst B1, 50 parts by mass of the tungsten trioxide was supported to 100 parts by mass of ZSM-5. Further, the tungsten oxide photocatalyst B1 used at this time had the crystal type identified as the WO₃ crystal type.

A compound photocatalyst composition was obtained by mixing the above-mentioned titanium oxide photocatalyst A1 (7g) and tungsten oxide photocatalyst B1 (3g).

### <Comparative example 3-1>

The compound photocatalyst composition of Comparative example 1 was obtained by mixing 7 g of a commercially available titanium oxide used in Example 3-1 and 3 g of a reagent tungsten trioxide B2 (manufactured by Wako Pure Chemical Industries, Ltd.).

### <Comparative example 3-2>

A compound photocatalyst composition was obtained by mixing 7 g of a commercially available titanium oxide (the specific surface area of 80 m²/g and an anatase-type) and 3 g of a zeolite (the hydrogen type ZSM-5, the specific surface area of 420 m²/g, and SiO₂/Al₂O₃ [molar ratio] = 80).

### <Examples 3-2 to 3-4>

Compound photocatalyst compositions were prepared in the same way as Example 3-1, except that the compounding ratio of the titanium oxide photocatalyst A1 and the tungsten oxide photocatalyst B1 was changed in Example 3-1.
Table 3 shows the constitution of the compound catalyst compositions of the above-mentioned Examples and Comparative examples.

### <Comparative example 3-3>

Fifty grams of anatase-type titanium oxide powder of 80 m²/g in the specific surface area and 50 g of urea were put in a glass beaker and mixed. This was heated with a mantle heater under being open to the air until the temperature of the mixture reached 150°C while stirring the mixture enough with a spatula. Next, the mixture was moved to a crucible and heated in an electric furnace at 350°C for 30 minutes in the ammonia gas, and a titanium oxide photocatalyst A2 doped with nitrogen was obtained. The obtained titanium oxide photocatalyst A2 doped with nitrogen was used alone.

### <Comparative example 3-4>

The reagent tungsten trioxide B2 (manufactured by Wako Pure Chemical Industries, Ltd.) used in Comparative example 3-1 was used alone.

**[Table 3]**

| | Titanium oxide photocatalyst A | Tungsten oxide photocatalyst B | primary particle diameter of WO₃ (nm) | Photocatalyst A/B (weight ratio) |
|---|---|---|---|---|
| Example 3-1 | A1 (TiO₂/Fe₂O₃=100/2) | B1 (ZSM5/WO₃=100/50) | 18 | 70/30 |
| Example 3-2 | A1 (TiO₂/Fe₂O₃=100/2) | B1 (ZSM5/WO₃=100/50) | 18 | 90/10 |
| Example 3-3 | A1 (TiO₂/Fe₂O₃=100/2) | B1 (ZSM5/WO₃=100/50) | 18 | 50/50 |
| Example 3-4 | A1 (TiO₂/Fe₂O₃=100/2) | B1 (ZSM5/WO₃=100/50) | 18 | 30/70 |
| Comparative example 3-1 | (Commercially available titanium oxide) | B2 (Reagent tungsten trioxide) | - | 70/30 |
| Comparative example 3-2 | (Commercially available titanium oxide) | (Commercially available ZSM-5) | - | 70/30 |
| Comparative example 3-3 | A2 (Nitrogen doped type) | - | - | 100/0 |
| Comparative example 3-4 | - | B2 (Reagent tungsten trioxide) | - | 0/100 |

### <Test example 3>

### «Photocatalytic activity test with fluorescent lamp irradiation»

The performance of decomposing acetaldehyde with the photocatalyst composition under the fluorescent lamp irradiation was measured using the compound photocatalyst compositions of the above-mentioned Example 3-1 to 3-4 and Comparative examples 3-1 to 3-4 by the following closed system test method. Each of the compound photocatalyst compositions obtained by the above-mentioned Examples and Comparative examples was dispersed in ethanol, and the dispersion liquid was applied on the one side of a glass plate of 150×70 mm so that the amount of the compound photocatalyst composition became 20 g/m² and dried at 60°C, thus the test piece was made.

A tedler bag (three liters in volume, and manufactured by Omi Odorair Service Company) was used as the reactor, and the test piece was sealed in the bag and then a test gas of 2L was inserted. Further, a gas that was adjusted so that the acetaldehyde concentration would be 300 ppm and the relative humidity be 50% at 25°C was used as the test gas. A fluorescent lamp for irradiating light was installed above the reactor, and it was set so that the illuminance on one side of the sample became 1000 luxes.

The acetaldehyde concentration in the reactor after the light irradiation was measured by the gas chromatography, and the time needed until the amount of acetaldehyde corresponding to 98% of the initial concentration was decomposed is shown in Table 4 as the acetaldehyde decomposition time. Moreover, the carbon dioxide concentration in the reactor was measured after 24 hours had passed from the start of the light irradiation, and the formation rate of the carbon dioxide formed by the decomposition of acetaldehyde is shown in Table 4.

### «Photocatalytic activity test with visible light irradiation»

Photocatalytic activity test with visible light irradiation was conducted in the same way, except that a transparent acrylic plate of 5 mm in thickness was installed between the reactor and the fluorescent lamp for the light irradiation and ultraviolet light of 380 nm or less that contained in the fluorescent lamp was cut in the above-mentioned photocatalytic activity test with fluorescent lamp irradiation. The test result was evaluated by the decomposition time needed until the amount of acetaldehyde corresponding to 98% of the initial concentration was decomposed and the formation rate of the carbon dioxide in the reactor after 24 hours had passed from the start of the light irradiation similarly to the above-mentioned photocatalytic activity test with fluorescent lamp irradiation. The results are shown in Table 4.

**[Table 4]**

| | Fluorescent lamp irradiation condition | | Visible light (UV cutoff) irradiation condition | |
|---|---|---|---|---|
| | Acetaldehyde decomposition time | Carbon dioxide formation rate | Acetaldehyde decomposition time | Carbon dioxide formation rate |
| Example 3-1 | 1.8 | 93% | 10.2 | 85% |
| Example 3-2 | 3.0 | 95% | 7.1 | 84% |
| Example 3-3 | 2.8 | 90% | 7.5 | 83% |
| Example 3-4 | 2.4 | 83% | 9.1 | 79% |
| Comparative example 3-1 | 7.2 | 75% | 24.0 | 18% |
| Comparative example 3-2 | 12.5 | 48% | 78.0 | 22% |
| Comparative example 3-3 | 4.5 | 88% | 32.0 | 58% |
| Comparative example 3-4 | 14.5 | 38% | 17.0 | 25% |

From Table 4, as for the compound photocatalyst compositions of the present invention that contain the titanium oxide photocatalyst and the tungsten oxide photocatalyst having the specific crystal structure, it is understood that the decomposition speed of acetaldehyde is faster and the formation rate of carbon dioxide is higher compared to the photocatalyst compositions in Comparative examples in either case of the fluorescent lamp irradiation condition and the visible light irradiation condition. On the other hand, as for the compound photocatalyst compositions of Comparative examples, the decomposition speed of acetaldehyde was slower compared to the compound photocatalyst compositions of Examples under the visible light irradiation condition. Moreover, because the formation rate of carbon dioxide is low, it seems that by-products such as acetic acid are formed in Comparative example 3-1 to 3-4.

### <Photocatalyst composition in the second aspect>

### <Example 4-1>

In the impregnating solution that 30 g of a commercially available aqueous ammonium metatungstate solution (WO₃ reduced concentration of 50% by weight) was diluted with 30 g of pure water, 30 g of ZSM-5 (the hydrogen type, the specific surface area of 400 m²/g, and SiO₂/Al₂O₃ molar ratio = 50) was put and mixed, and the mixed solution was dried at 100°C for five hours and then fired at 500°C for two hours in air. Next, the heat-treatment was conducted at 500°C for two hours in the reducing atmosphere (hydrogen 5%/nitrogen balanced), and a photocatalyst composition was obtained.

As for this photocatalyst composition, 50 parts by mass of the tungsten oxide was supported to 100 parts of ZSM-5. As the result of conducting the X-ray diffraction analysis, the photocatalyst composition was identified to be WO_{2.83} (ICDD card No.36-0103) that shows main peaks at 2θ values of 23.5°, 23.2°, 33.3°, 48.1°, and 53.7° as shown in Fig. 6, and the WOₓ crystal peak corresponding to X of 2.83 was confirmed.

### <Example 4-2>

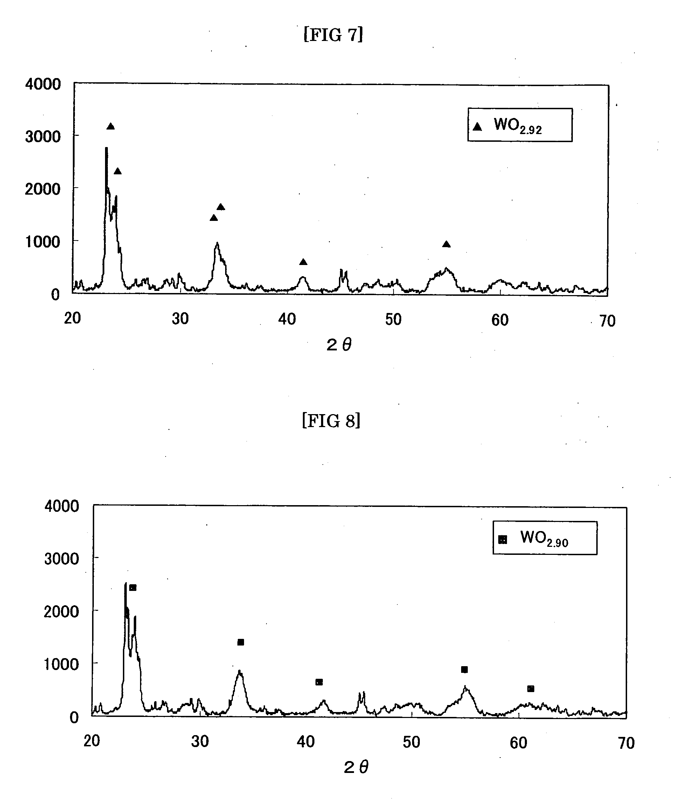

A photocatalyst composition was obtained in the same way as Example 4-1, except that the reduction temperature was changed to 350°C. As the result of conducting the X-ray diffraction analysis, the photocatalyst composition was identified to be WO_{2.92} (ICDD card No.30-1387) that shows main peaks at 2θ values of 2 23.3°, 24.2°, 33.0°, 33.8°, and 40.8° as shown in Fig. 7, and the WOₓ crystal peak corresponding to X of 2.92 was confirmed.

### <Example 4-3>

In the impregnating solution that 20 g of citric acid was dissolved in 30 g of an aqueous ammonium metatungstate solution (WO₃ reduced concentration of 50% by weight) and 70 g of pure water, 50 g of ZSM-5 (the ammonium type, the specific surface area of 420 m²/g, and SiO₂/Al₂O₃ molar ratio = 80) was put and mixed, and the mixed solution was dried at 100°C for five hours. The dried product was roughly crushed and put in a porcelain dish, and then it was covered with aluminum foil and fired at 500°C for two hours in air, thus a photocatalyst composition was obtained.

As for the photocatalyst composition, 30 parts by mass of the tungsten oxide was supported to 100 parts by mass of ZSM-5. As the result of the X-ray diffraction analysis, the photocatalyst composition was identified to be WO_{2.90} (ICDD card No.18-1417) that shows main peaks at 2θ values of 23.8°, 33.8°, 54.9°, 60.5°, and 41.0° as shown in Fig. 8, and the WOₓ crystal peak corresponding to X of 2.90 was confirmed.

### <Example 4-4>

A photocatalyst composition was obtained in the same way as Example 4-3, except that 20 g of oxalic acid was used instead of citric acid in Example 4-3. As for the photocatalyst composition, 30 parts by mass of the tungsten oxide was supported to 100 parts by mass of ZSM-5. As the result of the X-ray diffraction analysis, the photocatalyst composition was identified to be WO_{2.90} (ICDD card No.18-1417) similarly to Example 4-3, and the WOₓ crystal peak corresponding to X of 2.90 was confirmed.
Table 5 shows the constitution of the visible light-responsive photocatalyst compositions of Example 4-1 to 4-4 in a lump.

### <Comparative example 4-1>

A commercially available tungsten oxide (manufactured by Wako Pure Chemical Industries, Ltd.) was used. As the result of the X-ray diffraction analysis, the photocatalyst had the crystal peak identified to the rhombic crystal WO₃ (ICDD card No.20-1324).

### <Comparative example 4-2>

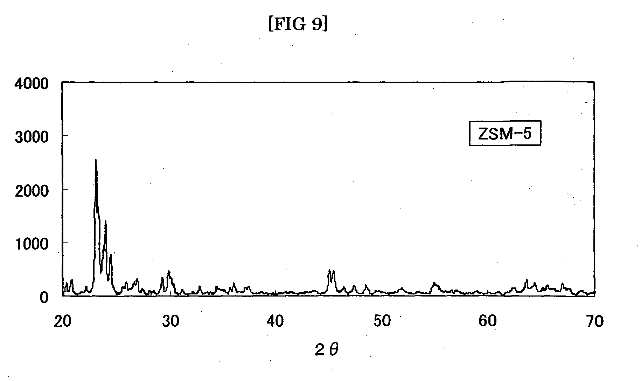

The photocatalyst composition of Comparative example 4-2 was made by mixing 20 g of ZSM-5 (the hydrogen type, the specific surface area of 400 m²/g, and SiO₂/Al₂O₃ molar ratio = 50) that was used in Example 4-1 and 10 g of a commercially available titanium oxide (the anatase-type and the specific surface area of 80 m²/g). The X-ray diffraction measurement result of single ZSM-5 is shown in Fig. 9 for reference.

**[Table 5]**

| | Raw material ZSM-5 | Photocatalyst composition (part by mass) | Firing condition | X-ray diffraction (WOₓ) | Primary particle diameter of WOₓ (nm) |
|---|---|---|---|---|---|
| Example 4-1 | Specific surface area 400m²/g SiO₂/Al₂O₃=50/1 | ZSM5/WOx =100/50 | In air 500°C→ Hydrogen 500°C | WO_{2.83} (X=2.83) | 33 |
| Example 4-2 | | | In air 500°C → Hydrogen 350°C | WO_{2.92} (X=2.92) | 27 |
| Example 4-3 | Specific surface area 420m²/g SiO₂/Al₂O₃=80/1 | ZSM5/WOₓ =100/30 | In air 500°C (Citric acid was added) | WO_{2.90} (X=2.90) | 20 |
| Example 4-4 | | | In air 500°C (Oxalic acid was added) | WO_{2.90}(X=2.90) | 22 |

### <Test example 4]>

The photocatalytic performance test with fluorescent lamp irradiation and the photocatalytic performance test with visible light irradiation were conducted by the same method as the above-mentioned Test example 3 by the use of photocatalyst compositions of Examples 4-1 to 4-4 and Comparative examples 4-1 to 4-2. The evaluation results are shown in Table 6.

**[Table 6]**

| | Fluorescent lamp irradiation condition | | Visible light (UV cutoff) irradiation condition | |
|---|---|---|---|---|
| | Acetaldehyde decomposition time | Carbon dioxide formation rate | Acetaldehyde decomposition time | Carbon dioxide formation rate |
| Example 4-1 | 4.5 | 90% | 15.5 | 85% |
| Example 4-2 | 3.2 | 82% | 12.0 | 74% |
| Example 4-3 | 2.8 | 85% | 11.5 | 78% |
| Example 4-4 | 2.5 | 87% | 11.0 | 79% |
| Comparative example 4-1 | 14.5 5 | 38% | 17.0 | 25% 25 % |
| Comparative example 4-2 | 24.0 | 79% | 98.0 | 16% |

From Table 6, as for the visible light-responsive photocatalyst composition of Examples that contain the tungsten oxide WOₓ (2.5≦X<3.0) having a specific crystal structure, it is understood that acetaldehyde has been rapidly decomposed in either the fluorescent lamp irradiation condition and the visible light irradiation condition. Moreover, it is understood from the formation rate of carbon dioxide that the photocatalyst composition has high oxidizing power.

On the other hand, though the photocatalyst compositions of Comparative example 4-1 to 4-2 where the crystal structure of the tungsten oxide is WO₃ has the visible light-responsive performance, because the oxidizing power is inferior compared to the photocatalyst compositions of Examples and the formation rate of carbon dioxide is low, it seems that by-products such as acetic acid are formed. Moreover, though the photocatalyst composition of Comparative example 4-2 is an example of combining the titanium oxide and zeolite and corresponds to a conventional photocatalyst composition, the photocatalytic performance by a visible light irradiation was hardly obtained in this photocatalyst composition, and a sufficient effect was not obtained easily under the irradiation of interior illumination like a fluorescent lamp.

### <Test example 5>

### <<Tungsten solubility test>>

As for the photocatalyst compositions containing the tungsten oxide of Examples 4-1 to 4-4 and Comparative example 4-1, the stability to an alkaline solution was examined. In the test, after 0.3 g of the photocatalyst composition was added in 10 g of aqueous ammonia of 1.0% by mass and was left overnight, the concentration of tungsten eluted in the liquid was measured with an ICP emission spectrometry device. The results are shown in Table 7.

**[Table 7]**

| | Tungsten concentration (mg/L) | Elution rate |
|---|---|---|
| Example 4-1 | 530 | 6.9% |
| Example 4-2 | 720 | 9.3% |
| Example 4-3 | 450 | 8.4% |
| Example 4-4 | 380 | 7.1% |
| Comparative example 4-1 | 10500 | 45.5% |

From Table 7, though the problem of eluting to an alkaline solution was seen in a conventional tungsten oxide photocatalyst shown in Comparative example 4-1, the photocatalyst compositions of Examples 4-1 to 4-4 show excellent chemical stability and it is understood that they exert the effect stably for a long term.

### <Example 4-5>

Fifty grams of the anatase-type titanium oxide powder of 80 m²/g in specific surface area was added in 80 g of aqueous ammonia of 0.6% by mass and stirred for one hour. After that, the aqueous solution where 25 g of a ferric nitrate was dissolved in 30 g of water was gradually dropped and the iron compound was deposited on the surface of the titanium oxide particles. A titanium oxide photocatalyst A3 supporting the iron oxide was obtained by filtering and washing the product after standing, drying at 150°C, and then heating 350°C for 30 minutes in air. As for the obtained titanium oxide photocatalyst A3, one part by mass of the iron oxide was supported to 100 parts by mass of the titanium oxide.

Next, in the impregnating solution where 30 g of a commercially available aqueous ammonium metatungstate solution (WO₃ reduced concentration of 50% by weight) and 20 g of citric acid were dissolved in 30 g of pure water, 50 g of ZSM-5 (the hydrogen type, the specific surface area of 400 m²/g, and SiO₂/Al₂O₃ molar ratio = 50) was put and mixed, and the mixed solution was dried at 100°C for five hours. This was put in a SUS vat, covered with aluminum foil, and fired at 400°C for 30 minutes in air. Thus a tungsten oxide photocatalyst B3 was obtained. As for the photocatalyst B3, 30 parts by mass of the tungsten trioxide was supported to 100 parts by mass of ZSM-5. Moreover, as the result of the X-ray diffraction measurement, it was confirmed that the tungsten oxide photocatalyst B3 had the crystal peak identified to be W₂₀O₅₈ (WO_{2.90}).
A compound photocatalyst composition was obtained by mixing the above-mentioned titanium oxide photocatalyst A3 (5g) and the tungsten oxide photocatalyst B3 (5g).

### <Example 4-6>

A tungsten oxide photocatalyst B4 was obtained in the same way as Example 4-5, except that tartaric acid was used instead of citric acid in the preparation of the tungsten oxide photocatalyst B3 in Example 4-5. As for the photocatalyst B4, 30 parts by mass of the tungsten oxide was supported to 100 parts by mass of ZSM-5. Moreover, the tungsten oxide was confirmed to have the crystal peak identified to be W₂₄O₆₈(WO_{2.83}) by the X-ray diffraction measurement.

A compound photocatalyst composition was obtained by mixing the titanium oxide photocatalyst A3 (5g) and the tungsten oxide photocatalyst B4 (5g).

The preparative procedure of the tungsten oxide photocatalyst in Examples 4-5 and 4-6 and the results of the X-ray diffraction measurement are shown in Table 8, and Table 9 shows the constitution of compound photocatalyst compositions combined with titanium oxide photocatalysts.

### <Test example 6>

The photocatalytic activity test with fluorescent lamp irradiation and the photocatalytic activity test with visible light irradiation were conducted in the same method as the above-mentioned Test example 3 by the use of the obtained compound photocatalyst compositions. The results are shown in Table 10.

**[Table 8]**

| | Raw material ZSM-5 | Photocatalyst composition (part by mass) | Firing condition | X-ray diffraction (WOₓ) | Primary particle diameter of WOₓ (nm) |
|---|---|---|---|---|---|
| Example 4-5 | Specie surface area 400m²/ g SiO₂/Al₂O₃=50/1 | ZSM5/WOx =100/30 | In air 400°C (Citric acid was added) | WO_{2.90} (X=2.90) | 19 |
| Example 4-6 | | | In air 400°C (Tartaric acid was added) | WO_{2.83} (X=2.83) | 20 |

**[Table 9]**

| | Titanium oxide photocatalyst A | Tungsten oxide photocatalyst B | Photocatalyst A/B (weight ratio) |
|---|---|---|---|
| Example 4-5 | A3 (TiO₂/Fe₂O₃=100/1) | B3 (ZSM5/WO₃=100/30) | 50/50 |
| Example 4-6 | A3 (TiO₂/Fe₂O₃=100/1) | B4 (ZSM5/WO₃=100/30) | 50/50 |

**[Table 10]**

| | Fluorescent lamp irradiation condition | | Visible light (UV cutoff) irradiation condition | |
|---|---|---|---|---|
| | Acetaldehyde decomposition time | Carbon dioxide formation rate | Acetaldehyde decomposition time | Carbon dioxide formation rate |
| Example 4-5 | 1.9 | 94% | 7.3 | 91% |
| Example 4-6 | 1.7 | 96% | 7.2 | 92% |

From the results in Table 10, it is understood that a more excellent photocatalytic effect will be obtained by combining and using a tungsten oxide photocatalyst having a specific crystal structure and a titanium oxide photocatalyst.

### INDUSTRIAL APPLICABILITY

The photocatalyst composition of the present invention may exert excellent photocatalytic effects also under the interior illumination, not to mention the sunlight because it has the light-responsive performance to visible light of 420 nm or less. Therefore, when the photocatalyst composition of the present invention is coated on inside and outside of building materials and the like, it may exert excellent functions including the decomposition and removal of harmful materials and odor materials in the air, wastewater purification, fouling prevention, anti-bacterium, and mildew resistance by the use of the sunlight and the indoor light. Moreover, the application is not limited, and because it is used in a wide range of fields including, not to mention the use to the equipment and decoration of the interior and exterior of buildings and the like, daily necessaries such as clothes and futons, road surfaces, blocks, bricks, sound insulating walls, shading walls, building sidewalls, roofs, panes, guardrails, road traffic signs, car bodies, and ship bottoms, it is extremely excellent industrially.

## Claims

1. A visible light-responsive photocatalyst composition, which is **characterized by** containing a tungsten oxide wherein the primary particle diameter of the crystal is 10 to 100 nm and the crystal structure measured by X-ray diffraction is WOₓ (2.5≦X≦3.0).

2. The visible light-responsive photocatalyst composition according to claim 1, wherein the crystal structure of said tungsten oxide is WO₃ (X = 3.0).

3. The visible light-responsive photocatalyst composition according to claim 1 or 2, wherein said composition further contains a titanium oxide, or a titanium oxide and an iron oxide.

4. The visible light-responsive photocatalyst composition according to claim 3, wherein 10 to 100 parts by mass of the tungsten oxide and 0.3 to 3 parts by mass of the iron oxide are contained relative to 100 parts by mass of the titanium oxide.

5. The visible light-responsive photocatalyst composition according to claim 1 or 2, wherein said composition further contains a titanium oxide photocatalyst that is excited with visible light of 380 nm or more.

6. The visible light-responsive photocatalyst composition according to claim 1, wherein the crystal structure of said tungsten oxide is WOₓ (2.5≦ X≦3.0).

7. The visible light-responsive photocatalyst composition according to claim 6, wherein the crystal structure of said tungsten oxide is one kind or more selected from the group consisting of W₂₄O₆₈ (X = 2.83), W₂₀O₅₈ (X = 2.90), and W₂₅O₇₃ (X = 2.92).

8. The visible light-responsive photocatalyst composition according to claim 6 or 7, wherein said tungsten oxide is supported on a porous inorganic oxide.

9. The visible light-responsive photocatalyst composition according to claim 8, wherein said porous inorganic oxide is ZSM-5.

10. The visible light-responsive photocatalyst composition according to any of claims 6 to 9, wherein further a titanium oxide is contained.

11. The visible light-responsive photocatalyst composition according to any of claims 6 to 9, wherein further a titanium oxide photocatalyst that is excited with visible light of 380 nm or more is contained.

12. The visible light-responsive photocatalyst composition according to claim 11, wherein said titanium oxide photocatalyst that is excited with visible light of 380 nm or more is a titanium oxide supporting iron oxide.

13. A process for producing a visible light-responsive photocatalyst composition, which is **characterized in that** an aqueous ammonium tungstate solution is impregnated in a porous inorganic oxide and then heat-treated under the reducing atmosphere.

14. The process for producing a visible light-responsive photocatalyst composition according to claim 13, wherein at least one kind of organic carboxylic acid selected from an oxalic acid, a citric acid, a tartaric acid, a phthalic acid, a maleic acid, and a malic acid together with the aqueous ammonium tungstate solution are impregnated in a porous inorganic oxide and then heat-treated under the oxidizing atmosphere.
